Europäisches Patentamt

European Patent Office

Office européen des brevets

(19)

(11) Numéro de publication : **0 068 962**
**B1**

(12) **FASCICULE DE BREVET EUROPÉEN**

(45) Date de publication du fascicule du brevet :
19.12.84

(51) Int. Cl.³ : **B 23 K 11/36, B 23 K 11/24**

(21) Numéro de dépôt : **82401069.8**

(22) Date de dépôt : **11.06.82**

(54) **Dispositif d'arrêt de sécurité d'une machine automatique notamment d'un robot de soudage électrique par résistance.**

(30) Priorité : **12.06.81 FR 8111645**

(43) Date de publication de la demande :
**05.01.83 Bulletin 83/01**

(45) Mention de la délivrance du brevet :
**19.12.84 Bulletin 84/51**

(84) Etats contractants désignés :
**DE GB IT SE**

(56) Documents cités :
**US-A- 3 469 060**
**US-A- 3 656 139**
**US-A- 3 857 069**
**US-A- 4 076 974**
**US-A- 4 251 764**

(73) Titulaire : **SOCIETE ANONYME AUTOMOBILES CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Bugyan, Etjen**
**97, Avenue Maurice Berteaux**
**F-78570 Andresy (FR)**
Inventeur : **Landre, Gérard**
**7, rue du Petit Marché**
**F-78300 Poissy (FR)**

(74) Mandataire : **Durand, Yves Armand Louis et al**
**Cabinet Z. Weinstein 20, Avenue de Friedland**
**F-75008 Paris (FR)**

**0 068 962**

**Description**

La présente invention a pour objet un dispositif d'arrêt de sécurité d'une machine automatique, telle que par exemple un robot de soudage électrique par points par résistance, en cas d'une rencontre accidentelle de sa tête mobile avec un obstacle métallique d'une certaine rigidité relié électriquement à la masse, l'outil étant le cas échéant alimenté par une source de puissance électrique à courant continu ou à faible fréquence, ce type de machine automatique étant connu en soi.

Les dispositifs d'arrêt de sécurité connus utilisent à cet effet par exemple des fusibles mécaniques, des détecteurs de couples ou moments de flexion maximum, des détecteurs de courant limite ou autres détecteurs.

Tous ces dispositifs connus ont pour inconvénients majeurs qu'ils sont trop inertes et pas suffisamment sensibles dans leur action de préservation. Ces appareils font trop souvent et inutilement appel à l'intervention de l'homme pour la remise en marche, à l'inspection préalable de l'installation ou, au contraire, ne garantissent pas suffisamment la machine de sa propre détérioration.

En fait, en particulier dans le cas d'application à l'industrie automobile et de la réalisation en grandes séries des structures de véhicules composées d'éléments en tôle d'acier embouti, il faut faire la distinction notamment entre deux types d'obstacles avec lesquels peut venir en contact la tête mobile d'un robot et l'outil qu'elle porte. Il y a les obstacles rigides formés par exemple par le montage et le bâti de présentation des tôles à assembler. Etant donné que ces obstacles sont généralement immobiles et non renouvelables, le risque d'une rencontre de la tête mobile ou de l'outil avec un tel obstacle, après la mise au point du programme d'action du robot, est relativement faible, mais le risque d'une détérioration de la machine si une telle rencontre a lieu, est relativement grand. Il y a ensuite des obstacles très flexibles que constituent par exemple les tôles elles-mêmes. Celles-ci forment l'élément principal de perturbation en cours de programme de fabrication du fait même de la dispersion de leur réalisation, de celle de leur centrage sur le bâti, de déformations dans leur transport. Les rencontres de ces tôles avec la tête mobile et l'outil sont fréquentes, surtout si l'outil travaille de très près, d'une intervention à l'autre, comme il est souhaitable afin de gagner du temps de fabrication et/ou comme il est nécessaire par exemple lorsqu'il s'agit d'un traitement par pulvérisation à courte distance. Dans la la majorité des cas, ces rencontres avec la tôle sont fugitives et, du fait de son élasticité, sans conséquence nuisible pour la tôle et pour la tête mobile et l'outil du robot.

Il ressort des remarques précédentes combien il serait avantageux de permettre au robot de faire la distinction entre les deux types d'obstacles et d'assurer par un arrêt la sécurité absolue de la machine dans le cas d'une rencontre avec un obstacle rigide du premier type et la continuation de marche ou sa remise en route automatique à la suite d'une rencontre avec un obstacle peu dangereux constituant la tôle. Or, les dispositifs d'arrêt de sécurité connus sont incapables d'une telle distinction.

La présente invention a donc pour but de proposer un dispositif d'arrêt de sécurité d'une machine, qui pallie les inconvénients, énoncés plus haut, des dispositifs d'arrêt connus. Pour atteindre ce but, le dispositif d'arrêt de sécurité selon l'invention est caractérisé en ce qu'il comprend une source de tension électrique de fréquence élevée, qui est reliée à l'outil de la machine, et un détecteur de la tension de fréquence élevée appliquée à l'outil ainsi qu'un circuit de commande d'un arrêt de sécurité relié au détecteur et produisant un signal d'arrêt à la suite d'une disparition de la tension de fréquence élevée à l'entrée du détecteur.

Selon une caractéristique avantageuse de l'invention, l'outil précité est relié à la masse par un élément électrique tel qu'une inductance, présentant une faible impédance à l'éventuelle basse fréquence du courant d'alimentation de l'outil et une impédance élevée à ladite fréquence élevée.

Selon une autre caractéristique avantageuse de l'invention le dispositif d'arrêt comprend un circuit d'invalidation du circuit de commande, pendant une durée de temps prédéterminée, qui est adapté pour masquer pendant cette durée de temps un signal de sortie du circuit détecteur, représentatif de la disparition de la tension de fréquence élevée appliquée à l'outil.

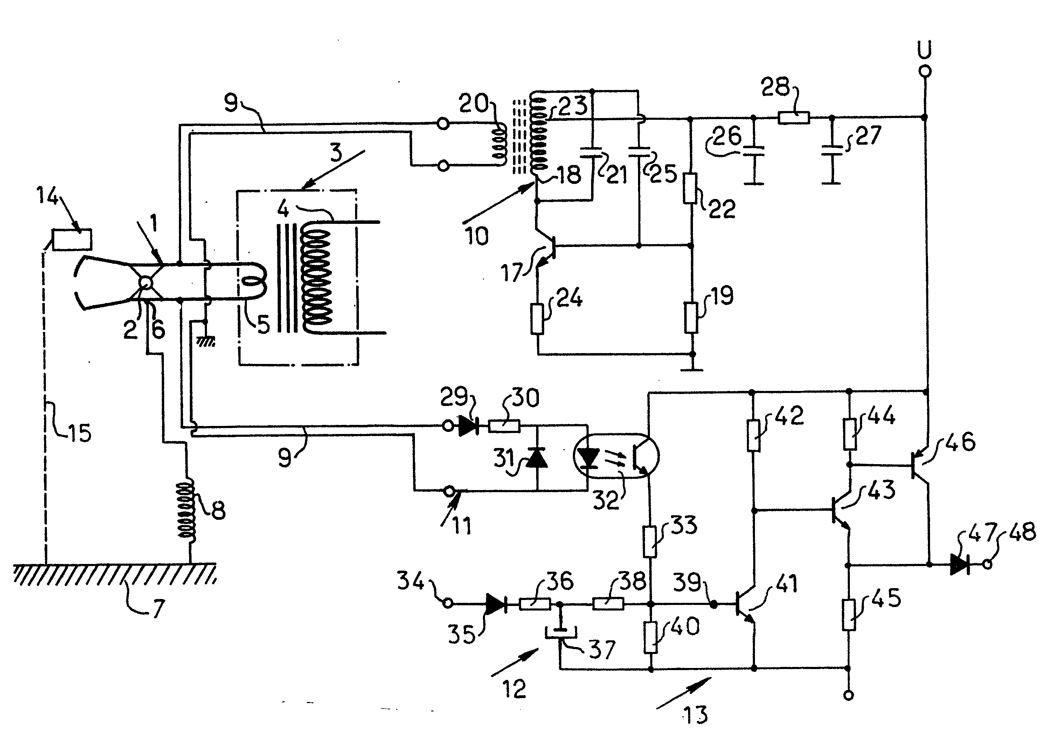

L'invention sera mieux comprise au cours de la description explicative qui va suivre faite en référence à la figure unique annexée donnée uniquement à titre d'exemple, illustrant de façon schématique le dispositif d'arrêt de sécurité selon l'invention.

Le dispositif d'arrêt de sécurité selon l'invention sera décrit, ci-après, à titre d'exemple, dans son application à un robot du type par exemple de soudage électrique par points de résistance. Sur la figure, seule la tête mobile, avec son outil, est représentée de façon schématique. L'outil porte le chiffre de référence 1. Il est formé par une pince de soudage par résistance articulée en 2. La pince est isolée électriquement du robot lui-même et est alimentée en énergie électrique par un transformateur 3. L'enroulement primaire 4 du transformateur est branché à une source de tension par exemple de 380 volts et de 50 Hz, formée par exemple par le réseau. L'outil, c'est-à-dire la pince 1, est relié directement à l'enroulement secondaire 5 du transformateur. Sa tension d'alimentation est relativement faible, mais il est parcouru par un courant de grande intensité (par exemple de l'ordre de 14 V et de 10 000 Ampères).

Selon l'invention, l'outil 1 est relié en 6 à la masse 7 par une inductance 8 inférieure à 10 mH. En outre, l'outil est monté dans un circuit électrique 9 de haute fréquence, par exemple de l'ordre de 100 kHz, entre un circuit oscillateur 10 et un détecteur 11 destiné à détecter la présence ou l'absence d'oscillations

0 068 962

de haute fréquence dans le circuit 9 comprenant l'outil, c'est-à-dire passant à travers l'enroulement secondaire 5 du transformateur 3. Le dispositif d'arrêt selon l'invention comporte en outre un circuit 12 destiné à masquer, pendant une durée de temps prédéterminée, l'effet du circuit détecteur 11 sur un étage de sortie 13 et adapté pour produire le signal d'arrêt du robot, à la suite d'une rencontre de l'outil 1 avec un obstacle risquant de détériorer le robot. L'obstacle est représenté en 14 de façon schématique. La ligne à traits interrompus 15 symbolise que l'objet 14 est relié à la masse 7.

On décrira ci-après les différents circuits électriques du dispositif d'arrêt de sécurité selon l'invention.

Le circuit oscillateur 10 comprend notamment un transistor 17 du type NPN. Dans le circuit collecteur de ce transistor est monté l'enroulement primaire 18 d'un transformateur dont l'enroulement secondaire 20 alimente le circuit de haute fréquence 9. Un condensateur 21 est monté en parallèle sur l'enroulement primaire 18. Une résistance 22 est montée entre la base du transistor 17 et un point intermédiaire 23 de l'enroulement primaire 18. Ce point intermédiaire 23 est en outre relié à la borne positive U d'une source de tension continue, par exemple de 12 volts. La base et l'émetteur du transistor sont reliés à la masse respectivement par des résistances 19 et 24. Un condensateur 25 est monté entre la base et l'extrémité de l'enroulement 18 qui est éloignée du collecteur du transistor. Le point intermédiaire 23 de l'enroulement primaire 18 est également relié à un circuit comprenant deux condensateurs 26, 27 mis au zéro et reliés par une résistance 28.

Le circuit détecteur 11 comprend essentiellement une diode 29, une résistance 30 montées entre la cathode de cette diode et la cathode d'une diode 31 dont l'anode est mise à la masse. Aux bornes de cette diode 31 est relié un photocoupleur 32 du type connu en soi. Le circuit de sortie de ce photocoupleur 32 est relié, d'une part au potentiel U et d'autre part à une résistance 33 dont l'autre borne est reliée au circuit de masquage 12.

Ce circuit de masquage est relié par son entrée 34 au circuit de commande des opérations de soudure et comporte, en série, une diode 35 et une résistance 36. La borne libre de cette résistance est reliée, d'une part à la masse par un condensateur 37 et par l'intermédiaire d'une résistance 38 à la résistance 33 et à la borne d'entrée 39 du circuit de sortie 13. Une résistance 40 est connectée entre la borne d'entrée 39 et le zéro de l'alimentation U.

Le circuit de sortie 13 comprend un transistor d'entrée 41 du type NPN. L'émetteur de ce transistor est mis au zéro, tandis que son collecteur est relié par une résistance 42 au potentiel positif U et à la base d'un transistor 43 du type NPN dont le collecteur est connecté au potentiel U par une résistance 44 et dont le circuit émetteur comprend une résistance 45 reliée également au zéro. Le collecteur du transistor 43 va à la base d'un transistor 46 du type PNP. L'émetteur de ce dernier est relié directement au potentiel U tandis que son collecteur est relié à l'émetteur du transistor 43 et à une diode 47 dont la cathode constitue la sortie 48 du circuit d'arrêt de sécurité selon l'invention.

Ce dispositif qui vient d'être décrit fonctionne de la façon suivante :

Il est tout d'abord à noter que l'inductance 8 montée en 6 entre l'outil 1 et la masse 7 constitue une impédance très faible (de l'ordre de quelques $\Omega$) pour le courant de travail de l'outil 1 formé par une pince de soudage. Par contre, pour le courant de haute fréquence produit par l'oscillateur 10 et présent sur le circuit 9, cette inductance 8 est une impédance très élevée (de l'ordre de quelques k$\Omega$). Dans ces conditions, à l'état de fonctionnement normal de l'outil 1, le circuit détecteur 11 constate la présence d'une oscillation de haute fréquence sur le circuit 9. Il détecte la tension de haute fréquence présente entre les bornes de l'inductance 8. En réponse à la détection d'une oscillation sur le circuit 9, le photocoupleur 32 produit entre ses bornes de sortie une résistance d'une valeur telle que le potentiel à l'entrée 39 du transistor 41 soit suffisamment élevé pour rendre conducteur ce transistor. Ceci a pour conséquence que la tension au collecteur du transistor 41 est faible et que le circuit 13 ne produit pas de signal de commande d'arrêt à sa sortie 48.

Si l'outil 1 vient en contact avec un obstacle métallique tel que l'obstacle 14, l'inductance 8 se trouve court-circuitée du fait que l'obstacle 14 est relié à la masse, et le circuit détecteur 11 ne détecte plus aucune tension de haute fréquence à ses bornes d'entrée. En réponse à cet état d'absence d'oscillation de haute fréquence sur le circuit 9, le photocoupleur 32 produit entre ses bornes une résistance de valeur élevée qui provoque, après un certain délai de temps, la diminution de la tension d'entrée du transistor 41 à une valeur insuffisante pour maintenir conducteur ce transistor. Le changement d'état du transistor 41 provoque à la borne de sortie 48 l'apparition d'un signal destiné à commander l'arrêt du robot.

Comme il a été décrit ci-avant, le changement d'état du transistor 41 est commandé par deux moyens : d'une part le circuit détecteur 11 qui le fait agir immédiatement et donc tend à provoquer l'arrêt de la machine et d'autre part un circuit de masquage 12 invalidant l'action du circuit 11 pendant le soudage.

Cette invalidation est essentiellement maintenue pendant le temps de décharge du condensateur 37 à travers la résistance 38. L'introduction d'un tel retard est indispensable pour éviter que le système de sécurité se déclenche lorsque l'outil 1 formé par la pince de soudage travaille et est donc en contact avec la tôle. Sans ce dispositif le robot s'arrêterait précisément au moment d'agir, la tôle se comportant électriquement sous l'action de la soudure comme un obstacle puisque reliée à la masse 7 par son bâti (non représenté).

Il est à noter qu'à la suite d'une rencontre de l'outil 1 avec l'obstacle flexible tel que de la tôle

3

# 0 068 962

s'escammotant sous l'outil du robot sans l'endommager, l'inertie d'arrêt du robot autorisera momentanément la poursuite du parcours de la tête mobile portant l'outil. Après franchissement de l'obstacle et même au cas où l'arrêt aurait eu finalement lieu la marche sera automatiquement réamorcée du fait même qu'il n'existe plus de liaison électrique entre l'outil et l'obstacle. De la rencontre avec un obstacle rigide résultera au contraire la permanence de la liaison électrique et donc l'arrêt de sécurité.

Une autre particularité intéressante est encore à remarquer, qui augmente la sécurité et suivant laquelle le risque de voir la machine continuer à marcher à la suite d'une rencontre avec un obstacle rigide est écarté alors que la liaison haute fréquence aurait été rompue. En effet, le détecteur 11 n'est pas alimenté directement par l'oscillateur 10, mais par un câblage passant par la pince 1. Dans ce cas, la rupture du câblage formée par le circuit 9, en amont ou en aval de la pince aura pour conséquence d'arrêter le robot, d'alerter le personnel d'entretien et de l'inciter à réparer le circuit défaillant.

On donnera ci-après à titre d'exemple les valeurs des différentes composantes électriques du dispositif d'arrêt de sécurité qui vient d'être décrit en référence à la figure unique. Il est évident que les valeurs pourraient être choisies différemment.

## Table des éléments électriques

| Résistance | Conductance | Inductance |
|---|---|---|
| 16 : 100 Ω | 21 : 47 n F | 8 : 8 à 10 mH |
| 22 : 10 kΩ | 25 : 47 n F | |
| 24 : 18 kΩ | 26 : 1 μ F | |
| 28 : 390 Ω | 27 : 0,33 μ F | |
| 30 : 2,2 kΩ | 37 : 15 μ F | |
| 33 : 10 kΩ | | |
| 36 : 2,2 kΩ | | |
| 38 : 10 kΩ | | |
| 40 : 10 kΩ | | |
| 42 : 2,2 kΩ | | |
| 44 : 10 kΩ | | |
| 45 : 10 kΩ | | |

## Revendications

1. Dispositif d'arrêt de sécurité d'une machine automatique telle que par exemple un robot de soudage électrique par résistance, lorsque l'outil (1) de la machine rencontre accidentellement un obstacle métallique (14) relié électriquement à la masse, l'outil (1) étant le cas échéant alimenté par une source de puissance électrique (3) à courant continu ou à faible fréquence, caractérisé en ce qu'il comprend une source de tension électrique de fréquence élevée (10) qui est reliée à l'outil (1) et un détecteur (11) de la tension de fréquence élevée appliquée à l'outil (1) ainsi qu'un circuit de commande (13) d'un arrêt de sécurité relié à la sortie du détecteur (11) et produisant un signal d'arrêt à la suite de la disparition de la tension de fréquence élevée à l'entrée du détecteur (11).

2. Dispositif selon la revendication 1, caractérisé en ce que l'outil (1) est relié à la masse (7) par un élément électrique tel qu'une inductance (8), présentant une faible impédance à la fréquence du courant d'alimentation de l'outil et une forte impédance à ladite fréquence élevée.

3. Dispositif selon l'une des revendications précédentes, caractérisé en ce que le circuit oscillateur (10) comprend un transistor (17) à couplage inductif (18) entre son collecteur et sa base.

4. Dispositif selon l'une des revendications précédentes, caractérisé en ce qu'il comprend un circuit d'invalidation (12) du circuit de commande (13) pendant une durée de temps prédéterminée, qui est adaptée pour masquer pendant cette durée de temps un signal de sortie du circuit détecteur (11), représentatif de la disparition de la tension de fréquence élevée appliquée à l'outil (1).

5. Dispositif selon l'une des revendications précédentes, caractérisé en ce que le circuit détecteur (11) comprend un photocoupleur (32) dont le circuit de sortie est monté dans un diviseur de tension (33, 40) relié à l'entrée (39) du circuit de commande (13), de façon à produire à l'entrée (39) un potentiel électrique qui est fonction de la détection par le détecteur (11) de la présence ou de l'absence à son entrée d'une tension de fréquence élevée.

6. Dispositif selon la revendication 4, caractérisé en ce que le circuit d'invalidation (12) comprend essentiellement un condensateur agencé pour être chargé lorsqu'une disparition de la tension de fréquence élevée à l'entrée du détecteur (11) est susceptible de se produire et pour se décharger à travers un chemin résistif comprenant la résistance (38) de polarisation de l'entrée du circuit de commande (13).

7. Dispositif selon la revendication 6 pour une machine dont l'outil est formé par une pince de soudage électrique, caractérisé en ce que l'entrée (34) du circuit d'invalidation (12) est reliée au circuit de

4

commande des opérations de soudage et en ce que le condensateur (37) est chargé à travers une diode d'entrée (35).

8. Dispositif selon l'une des revendications 2 à 7, caractérisé en ce que l'oscillateur de fréquence élevée a une fréquence supérieure à 1 kHz, de préférence de l'ordre de 100 kHz, et l'inductance (8) est inférieure ou égale à 10 mH.

9. Machine automatique, caractérisée en ce qu'elle comprend un dispositif d'arrêt de sécurité selon l'une des revendications précédentes.

**Claims**

1. A device for safety stoppage of an automatic machine such as for example an electric resistance welding robot, when the tool (1) of the machine casually meets a metallic obstacle (14) electrically connected to the ground, the tool (1) being possibly supplied by a source (3) of electrical d. c. or low-frequency power, characterized in that it includes a source (10) of high-frequency voltage which is connected to the tool (1) and a detector (11) of the high-frequency voltage applied to the tool (1) as well as a safety stoppage control circuit (13) connected to the output of the detector (11) and producing a stoppage signal as a result of the disappearance of the high-frequency voltage at the input of the detector (11).

2. A device according to claim 1, characterized in that the tool (1) is connected to the ground (7) by an electric element such as an inductance (8) exhibiting low impedance at the frequency of the tool supply current and a high impedance at the said high frequency.

3. A device according to one of the foregoing claims, characterized in that the oscillator circuit (10) includes a transistor (17) with an inductive coupling (18) between its collector and its base.

4. A device according to one of the foregoing claims, characterized in that it includes a circuit (12) for invalidating a control circuit (13) for a predetermined period of time, which is adapted to mask during this period of time an output signal of the detector circuit (11), representing the disappearance of the high-frequency voltage applied to the tool (1).

5. A device according to one of the foregoing claims, characterized in that the detector circuit (11) includes a photocoupler (32) whose output circuit is mounted in a voltage divider (33, 40) connected to the input (39) of the control circuit (13), so as to produce at the input (39) an electric potential which depends upon the detection by the detector (11) of the presence or the absence of a high-frequency voltage at its input.

6. A device according to claim 4, characterized in that the invalidating circuit (12) includes essentially a capacitor arranged to be charged when a disappearance of the high-frequency voltage at the input of the detector (11) is likely to occur, and to discharge through a resistive path including the resistor (38) for biasing the input of the control circuit (13).

7. A device according to claim 6 for a machine whose tool consists of electric welding tongues, characterized in that the input (34) of the invalidation circuit (12) is connected to the welding-process control circuit and in that the capacitor (37) is charged through an input diode (35).

8. A device according to one of claims 2 to 7, characterized in that the frequency of the high-frequency oscillator is higher than 1 kHz, preferably of the order of 100 kHz, and the inductance (8) is lower than or equal to 10 mH.

9. An automatic machine, characterized in that it includes a safety stoppage device according to one of the foregoing claims.

**Ansprüche**

1. Sicherheitsvorrichtung zum Abschalten einer selbsttätigen Maschine wie z. B. eines elektrischen Widerstandsschweissroboters, wenn das Werkzeug (1) der Maschine zufälligerweise auf ein elektrisch geerdetes metallisches Hindernis (14) stösst, wobei das Werkzeug (1) gegebenenfalls durch eine elektrische Gleichstrom- bzw. Niederfrequenzkraftquelle gespeist wird, dadurch gekennzeichnet, dass sie eine an das Werkzeug (1) angeschlossene elektrische Hochfrequenzspannungsquelle (10) und einen Detektor (11) für die an das Werkzeug (1) angelegte Hochfrequenzspannung sowie eine, ein Sicherheitsabschalten bewirkende, am Ausgang des Detektors (11) angeschlossene Steuerschaltung (13) für die Erzeugung eines Abschaltsignals nach dem Verschwinden der Hochfrequenzspannung am Eingang des Detektors (11).

2. Vorrichtung nach Anspruch 1, dadurch gekennzeichnet, dass das Werkzeug (1) an die Erde (7) über ein elektrisches Glied wie einen induktiven Blindwiderstand (8) angeschlossen ist, welches bei der Werkzeugspeisungsstromfrequenz eine schwache und bei der besagten Hochfrequenz eine starke Impedanz aufweist.

3. Vorrichtung nach einem der vorangehenden Ansprüche, dadurch gekennzeichnet, dass der Oszillatorschwinkkreis (10) einen Transistor (17) mit induktiver Kopplung (18) zwischen seinem Kollektor und seiner Basis umfasst.

4. Vorrichtung nach einem der vorangehenden Ansprüche, dadurch gekennzeichnet, dass sie eine Schaltung (12) zum Unwirksammachen einer Steuerschaltung (13) während einer vorbestimmten Zeitdauer aufweist, welche angepasst ist, um während dieser Zeitspanne ein Ausgangssignal der Detektorschaltung (11) zu verdecken, welches das Verschwinden der an das Werkzeug (1) angelegten Hochfrequenzspannung darstellt.

5. Vorrichtung nach einem der vorangehenden Ansprüche, dadurch gekennzeichnet, dass die Detektorschaltung (11) einen Fotokoppler (32) umfasst, dessen Ausgangsstromkreis in einem, an dem Eingang (39) der Steuerschaltung (13) angeschlossenen Spannungsteiler (33, 40) geschaltet ist, um am Eingang (39) ein elektrisches Potential zu erzeugen, welches von der Feststellung, durch den Detektor (11), des Vorliegens bzw. des Fehlens einer Hochfrequenzspannung an seinem Eingang abhängt.

6. Vorrichtung nach Anspruch 4, dadurch gekennzeichnet, dass die Unwirksammachungsschaltung (12) im wesentlichen einen Kondensator aufweist, der ausgebildet ist, um aufgeladen zu werden, wenn ein Verschwinden der Hochfrequenzspannung am Eingang des Detektors (11) stattfinden kann und um sich durch einen, einen Vorspannungserzeugungswiderstand (38) am Eingang der Steuerschaltung (13) aufweisenden widerstandsfähigen Weg zu entladen.

7. Vorrichtung nach Anspruch 6, für eine Maschine, dessen Werkzeug durch eine elektrische Schweisszange gebildet ist, dadurch gekennzeichnet, dass der Eingang (34) der unwirksammachenden Schaltung (12) an die die Schweissvorgänge steuernde Schaltung angeschlossen ist und dass der Kondensator (37) über eine Eingangsdiode (35) geladen wird.

8. Vorrichtung nach einem der Ansprüche 2 bis 7, dadurch gekennzeichnet, dass der Hochfrequenzoszillator eine Frequenz hat, die höher als 1 kHz ist und vorzugsweise in der Grössenordnung von 100 kHz liegt, und der induktive Blindwiderstand (8) kleiner als oder gleich 10 mH ist.

9. Automatische Maschine, dadurch gekennzeichnet, dass sie eine Sicherheitsabschaltvorrichtung gemäss einem der vorangehenden Ansprüche aufweist.

1